# EUROPEAN PATENT APPLICATION

(11) **EP 1 065 177 A1**
(43) Date of publication of application: **03.01.2001**
(21) Application number: 00110813.3
(22) Date of filing: 22.05.2000
(51) Int. Cl.: C03C 3/095

(54) **Glass for tungsten-halogen lamp envelope**

(30) Priority: 02.07.1999 US 142094 P
(71) Applicant: CORNING INCORPORATED, Corning, N.Y. 14831 (US)
(72) Inventor: Stewart, Ronald Leroy, Corning Incorporated, Corning, NY 14831 (US)
(74) Representative: Marchant, James Ian

(57) **Abstract**

The present invention resides in a glass composition suitable as an envelope for tungsten-halogen lamp, said glass exhibiting a strain point of about 668-686°C, a coefficient of thermal expansion of about 42-51 x10⁻⁷/°C, a liquidus temperature below 1080 °C, a viscosity at liquidus temperature greater than 150,000 poises, a transmission at 585 nm of about 6-25%, and consisting essentially, in terms of weight percent on the oxide basis, of: 53-56% SiO₂, 4-6% B₂O₃, 15-17% Al₂O₃, 7-9% BaO, 0.1-0.5% SrO, 4-9% CaO, 4-6% MgO, 0-1% ZnO, 1-8% Nd₂O₃.

## Description

### BACKGROUND OF THE INVENTION

### 1. Field of Invention.

The present invention relates to a glass suitable for the manufacturing of high temperature lamp envelopes such as tungsten-halogen lamp envelopes. More specifically the present invention relates to such a glass that renders the lamp a high color and increases the correlated color temperature (CCT) of the lamp.

### 2. Description of Related Art.

In the automotive industry there is a continued need for automobile headlights which provide better illumination of the surrounding environment. In recent years tungsten-halogen lamps have gained popularity over conventional incandescent sealed beam lamps due to several advantages which include: a whiter light emitted; a smaller size lamp produces an equivalent or even greater quantity of light; the intensity of the illumination remains virtually constant over the life of the lamp; and, the serve life is significantly longer. In spite of these advantages, however, tungsten-halogen lamps can be improved especially with respect to illumination and contrast performance. This may be achieved, for example, by manufacturing the lamp envelopes out of glass that renders the tungsten-halogen lamp a high color, i.e., true color, and increases the CCT of the tungsten-halogen lamp.

Because tungsten-halogen lamps operate at considerably high temperatures, generally between about 500-700°C, suitable glasses for these lamp envelopes must be thermally stable (resist devitrification) and withstand thermal deformation at high temperatures. Additionally, the glass must seal to the molybdenum leads while maintaining integrity through lamp operation. The glass must also be able to be economically formed into good quality tubing.

Hence, much research has been concentrated upon alkaline earth aluminosilicate glasses because such are suitable for mass production of tungsten-halogen lamp envelopes, while concurrently manifesting the properties necessary for lamp operation.

U.S. Pat. No. 3,496,401 describes the basic mechanism underlying the operation of tungsten-halogen incandescent lamps with specific reference to tungsten-iodide lamps. The thrust of that patent was to provide alkaline earth metal aluminosilicate glass compositions which would be suitable as envelopes for such lamps. Those glasses consisted essentially, expressed in weight percent on the oxide basis, of 10-25% alkaline earth metal oxide, 13-25% Al₂O₃, 55-70% SiO₂, 0-10% B₂O₃, and less than 0.1% alkali metal oxide.

U.S. Pat. No. 3,978,362 discloses glasses designed for tungsten-bromine lamp envelopes displaying strain points greater than 700°C, liquidus viscosities of at least 100,000 poises, operable melting temperature no higher than 1550°C, liquidus temperature less than 1200°C, and coefficients of thermal expansion between 48-55x10⁻⁷/°C, the glass composition consisting essentially, in weight percent, of 14-21% CaO, 0-5% MgO, 0-7% BaO, the total CaO+MgO+BaO being at least 19%, 13-16% Al₂O₃, 0-10% SrO and/or La₂O₃ and 58-63% SiO₂.

U.S. Pat. No. 4,060,423 described another group of glass compositions particularly designed for use an envelopes for tungsten-halogen lamps. Those glasses are characterized as exhibiting a liquidus temperature no greater than 1250°C., a strain point of at least 725°C, and a coefficient of expansion of about 42-48x10⁷/°C. The compositions therefor consist essentially, expressed in terms of weight percent on the oxide basis, of 55-68% SiO₂, 15-18% Al₂O₃, 6-13% CaO, and 6-16% BaO, wherein the weight ratio Al₂O₃:CaO+BaO is about 0.6:1 to 1:1.

U. Pat. No. 4,255,198 discloses glasses suitable for sealing to molybdenum metal, in tungsten-halogen lamps, and having a strain point in excess of 730°C, a liquidus temperature of at least 40,000 poises, axial compression at room temperature not exceeding 350 PPM and axial compression or tension not exceeding 150 PPM at 500°C, a coefficient of thermal expansion between 43-48x10⁻⁷/°C. The glasses have a composition consisting essentially, in terms of weight percent on the oxide basis, of: 62-64% SiO₂, 14-16% Al₂O₃, 10-13% CaO, and 7-9% SrO.

U.S. Pat. No. 4,302,250 discloses glasses for use as envelopes for tungsten-halogen lamps displaying strain points higher than 750°C, liquidus viscosities of at least 40,000 poises, liquidus temperatures below 1300° C and coefficients of thermal expansion between 48-55x10⁻⁷/° C, consisting essentially, in weight percent, of 11-14% CaO, 2-6.5 % SrO+BaO, consisting essentially of 0-4% SrO and 0-5% BaO, 16.5-18.5% Al₂O₃, and 64-68% SiO₂.

U.S. Pat. No. 4,605,632 discloses a high silica glass for the production of envelopes for tungsten-halogen lamps, consisting essentially, by weight, of 1-2.5% Al₂O₃, 0.25-1% CaO, 0.1-0.25 Na₂O and/or K₂O, 2.5-3.5 % B₂O₃, 0.15-0.3% F, and the remainder SiO₂.

U.S. Pat. No. 4,394,453 describes a glass composition suitable for tungsten-halogen lamps, consisting essentially, expressed in weight percent on the oxide basis, of 60±1.5% SiO₂, 17.0±1% Al₂O₃, 5.0±0.8% B₂O₃, 11.4±0.8% CaO, and 7.5±0.8% MgO. The physical properties of the disclosed glasses are a strain point of at least 670°C, a coefficient of thermal expansion of 42-45x10⁻⁷/°C, a liquidus temperature below 1100°C, and a liquidus viscosity greater than 20000 poises.

U.S. Pat. No. 4,409,337 discloses glasses for tungsten-halogen lamps which exhibit a strain point in excess of 665°C, a liquidus temperature no higher than 1125°C, a liquidus viscosity of at least 50,000 poises, and a coefficient of thermal expansion between about 42-46x10⁻⁷/°C, the composition consisting essentially, in terms of weight percent on the oxide basis, of 56-59% SiO₂, 16-17% Al₂O₃, 4.5-5.25% B₂O₃, 7.5-9.25% CaO, 5.5-6.25% MgO, and 5-9% MgO, wherein the sum of SiO₂+ Al₂O₃, will not exceed about 75%, the weight ratio SiO₂:Al₂O₃ is maintained between about 3.1-3.7 and the weight ratio CaO:MgO is held between about 1.2-2.0.

U.S. Pat. No. 4,693,987 discloses a glass for use as envelopes for tungsten-halogen lamps especially where molybdenum metal wires are used, the glass having strain points between 718°-725°C, liquidus viscosities of at least 50,000 poises, liquidus temperatures below 1145-1180°C and coefficients of thermal expansion between 46.2-50.1x10⁻⁷/°C, consisting essentially, in weight percent, of 10-7-11.9% CaO, 9.1-13.1% BaO, 14.6-15.1% Al₂O₃, and 60.5-62.4% SiO₂.

Correlated Color Temperature (CCT) is used in the lighting industry to describe and compare the color appearance of lamps. CCT refers to the temperature of a blackbody radiator whose perceived color most closely resembles that of a given light source. As the temperature of a blackbody is raised, its color changes from a dull red to bright red, then orange, yellow, white and finally blue. Thus, lower temperatures imply longer wavelengths and "warmer" colors; higher temperatures imply shorter wavelengths and "cooler" colors. In particular, typical automotive tungsten-halogen lamps are warm in color and show CCT ranging from 2800-3200K; a value given by the fact that tungsten-halogen lamps produce light in the yellow to red wavelength region of the spectrum between 560-700 nm and less in the blue to green wavelength region of the spectrum between 400-560 nm. A method of raising the CCT in tungsten-halogen lamps is to selectively absorb a small percentage of visible radiation in the longer wavelength region (yellow to red) while fully transmitting in the shorter wavelength region (blue to green). In terms of color temperature, absorbing or "subtracting" these higher wavelengths of energy results in a shift in CCT to higher or "cooler" temperatures. A method of absorbing the higher wavelengths is to dope the glass envelope with specific cations in the form of elemental oxide material, in particular neodymium oxide.

Neodymium containing glass is known. It has historically found employment in the aviation and navigation fields.¹ Long recognized as a glass coloring agent, neodymium, a rare-earth element, possesses an absorption spectra that extends over both the visible and invisible regions, transferring practically unchanged to glasses.² It is also known that neodymium absorbs light in the yellow region of the visible spectrum, between 568-590 nm. Illuminated objects seen through neodymium containing glass look very clear, in the surrounding environment because the red and green tones are accentuated.³ Experiments have also shown that neodymium containing glass provides an increase in visibility during foggy weather.⁴

Recently, neodymium containing glass has been disclosed in US 5,548,491 (Karpen) for the production of motor vehicle headlights to reduce the visual discomfort from oncoming cars at night. Karpen discloses neodymium doped soda-lime silica glass for incandescent lamps, and neodymium doped borosilicate or quartz glass for tungsten-halogen lamps. Although neodymium oxide in the range of 5-30% by weight is disclosed, there are no specific glass compositions provided.

Hirano et al. (US 4,315,186) discloses a reflective electric lamp with a neodymium doped front lens section fused to a reflective mirror section. The front lens section only is formed from a neodymium containing glass, Nd₂O₃ accounting for 0.5-5% by weight. Again no specific glass compositions are disclosed. Borosilicate glass is given as an example of a glass material suitable for the manufacturing of the front lens mirror.

However, what the prior art has failed to do and what this invention provides is a narrow range of compositions within the alkaline earth aluminosilicate system in combination with Nd₂O₃ that increases the CCT above 3200K, preferably up to 4000 K, renders the lamp a high color, concurrently being suitable for mass production glass shaping techniques and meeting the following desired requirements for coefficient of thermal expansion, strain point and liquidus necessary for successful lamp operation.

### REFERENCES

1. Weyl, Woldemar A; Coloured Glasses; Published by Society of Glass Technology, "Thorton", 20 Hallam Gate Road, Sheffield, S10 5BT, England, 1951; page 227.
2. Ibid., page 218.
3. Ibid., page 226.
4. Ibid., page 227.

### SUMMARY OF THE INVENTION

The present invention resides in glass compositions for high temperature lamp envelopes consisting essentially, as expressed in terms of weight percent, of 53-56% SiO₂, 4.1-5.2% B₂O₃, 15-17% Al₂O₃, 7.5-8.5% BaO, 0.1-0.5% SrO, 4-8% CaO, 4-6% MgO, 0-1% ZnO, 1.0-8% Nd₂O₃, and exhibiting the following properties:
Strain point between about 668-686°C
Coefficient of thermal expansion between about 42-51x10⁻⁷/°C
Liquidus temperature below 1080°C
Viscosity at liquidus temperature greater than 150,000 poises
Transmission at 585 nm of between 6-25%

Lamp envelopes are conventionally fabricated from sections of glass tubing. The standard commercial tubing process is the Vello high speed tube drawing process. Glasses suitable for this process must exhibit a viscosity at liquidus preferably higher than 60,000 poises and a liquidus temperature no higher than 1130°C. The present inventive glass compositions exhibit the thermal stability and viscosity parameters amenable to the Vello process, and therefore can be shaped into tubing utilizing this process. is required.

### BRIEF DESCRIPTION OF THE DRAWINGS

FIG. 1 is a graph illustrating the light transmission spectra of a glass without Nd₂O₃.
FIG. 2 is a graph illustrating the light transmission spectra of a glass of the present invention containing 1.3 wt.% Nd₂O₃.
FIG. 3 is a graph illustrating the light transmission spectra of a glass of the present invention containing 2.58 wt.% Nd₂O₃.
FIG. 4 is a graph illustrating the light transmission spectra of a glass of the present invention containing 4.24 wt.% Nd₂O₃.

### DESCRIPTION OF PREFERRED EMBODIMENTS

Table I records a number of glass compositions, expressed in terms of weight percent on the oxide basis, illustrating the parameters of the present invention. Inasmuch as the sum of the individual components totals or very closely approximates 100, for all practical purposes the reported values may be deemed to reflect weight percent. The actual batch ingredients may comprise any materials, either oxides or other compounds, which, upon being melted together, will be converted into the desired oxides in the proper proportions. To illustrate, CaCO₃ can be utilized as the source of CaO.

The batch materials were compounded, ballmilled together to assist in the production of a homogenous melt, and charged into platinum crucibles. After placing lids, thereon, the crucibles were placed into a furnace, and the batches were melted at about 1600 °C for about 16 hours. The crucibles were then removed from the furnace. Annealing took place at about 720°C, followed by slow cooling to room temperature.

**TABLE I**

| | **1** | **2** | **3** | **4** | **5** | **6** | **7** | **8** | **9** | **10** |
|---|---|---|---|---|---|---|---|---|---|---|
| SiO₂ | 56.2 | 56.3 | 56.3 | 56.4 | 55.9 | 56.3 | 56.2 | 56.2 | 55.0 | 56.0 |
| Al₂O₃ | 16.2 | 16.2 | 16.2 | 16.2 | 16.1 | 16.2 | 16.2 | 16.2 | 15.9 | 16.1 |
| B₂O₃ | 4.89 | 4.91 | 4.67 | 4.52 | 4.46 | 4.61 | 4.60 | 4.57 | 4.10 | 4.47 |
| CaO | 8.16 | 6.95 | 7.32 | 7.72 | 7.27 | 7.47 | 7.42 | 7.41 | 6.60 | 7.44 |
| MgO | 5.66 | 5.55 | 5.54 | 5.55 | 5.50 | 5.54 | 5.54 | 5.53 | 5.42 | 5.52 |
| SrO | 0.14 | 0.25 | 0.25 | 0.26 | 0.25 | 0.26 | 0.26 | 0.26 | 0.24 | 0.26 |
| BaO | 8.24 | 7.92 | 7.9 | 7.92 | 7.85 | 7.91 | 7.90 | 7.89 | 7.73 | 7.87 |
| ZnO | | 0 | 0 | 0 | 0 | 0 | 0 | 0 | 0.68 | 0.7 |
| Nd₂O₃ | | 1.74 | 1.73 | 1.30 | 2.58 | 1.59 | 1.73 | 1.88 | 4.24 | 2.16 |

| | **11** | **12** | **13** | **14** | **15** | **16** | **17** | **18** | **19** | **20** |
|---|---|---|---|---|---|---|---|---|---|---|
| SiO₂ | 56.1 | 54.5 | 56.3 | 55.6 | 55.9 | 56.1 | 55.7 | 54 | 53 | 53.1 |
| Al₂O₃ | 16.2 | 15.7 | 16.2 | 16.0 | 16.1 | 16.2 | 16 | 15.5 | 15.2 | 15.3 |
| B₂O₃ | 4.59 | 4.85 | 4.79 | 4.95 | 4.89 | 4.89 | 5.01 | 4.98 | 5 | 5.24 |
| CaO | 6.92 | 6.97 | 7.14 | 7.40 | 7.20 | 7.11 | 7.31 | 5.6 | 5.86 | 5.32 |
| MgO | 5.53 | 5.01 | 5.55 | 5.53 | 5.45 | 5.39 | 5.46 | 5.26 | 4.21 | 4.35 |
| SrO | 0.25 | 0.24 | 0.25 | 0.14 | 0.14 | 0.13 | 0.14 | 0.21 | 0.22 | 0.21 |
| BaO | 7.88 | 7.99 | 7.91 | 8.15 | 8.14 | 7.94 | 8.15 | 8.03 | 8.01 | 8.03 |
| ZnO | 0.7 | 0 | 0 | 0 | 0 | 0 | | | | |
| Nd₂O₃ | 1.73 | 4.24 | 1.74 | 1.73 | 1.73 | 1.73 | 1.73 | 6.02 | 7.97 | 7.98 |

Table II recites measurements of several physical properties as determined on the glasses in accordance with techniques conventional in the glass art. The strain point is reported in terms of degrees C. The linear coefficient of thermal expansion (Coef.) of Exp.) is determined over the range of 25°-300°C and is recorded in terms of x10⁻⁷/°C. The liquidus temperature (Liq.) is reported in degrees C., and the viscosity at the liquidus temperature (Liq. Vis.) in poises.
The strain point provides an indication of the thermal endurance exhibited by a glass during lamp operation, as well as the temperature near where stresses begin to develop in glass-to-metal seals. A glass suitable for the manufacturing of high temperature lamp envelopes should have a strain point higher than 660°C.

The coefficient of thermal expansion is an important parameter in determining the type of metal needed for the metal leads of the lamp which would provide the least stress at the glass-to-metal seal. In the case of tungsten-halogen lamps, the metal leads are fashioned from molybdenum which has a coefficient of thermal expansion of about 55 x10⁻⁷/°C. Generally, the closer the match between the glass and the metal the less stress will develop.

The viscosity at the liquidus temperature is an indication of the glass's ability to withstand devitrification during the tube drawing process. The higher the viscosity at the liquidus temperature the less likely is that devitrification will occur.

**TABLE II**

| | **1** | **2** | **3** | **4** | **5** | **6** | **7** | **8** | **9** | **10** |
|---|---|---|---|---|---|---|---|---|---|---|
| Strain Point | 660 | 685 | 682 | | 668 | | 675 | | 683 | 677 |
| Coef. of Exp. | 44.6 | 42.2 | 45.1 | | 49.4 | | 48.1 | | 45.7 | 49.2 |
| Liq. | 1100 | | | | | | | | | |
| Liq. Viscos. | 1.1x 10⁴ | | | | | | | | | |
| % Trans. at 585 nm | 91 | 50.3 | 50.1 | 59 | | 52.6 | | 48.7 | 22.2 | 44.9 |

| | **11** | **12** | **13** | **14** | **15** | **16** | **17** | **18** | **19** | **20** |
|---|---|---|---|---|---|---|---|---|---|---|
| Strain Point | 678 | 677 | 679 | 674 | 680 | 680 | 676 | 685 | 686 | 686 |
| Coef.of Exp. | 51.3 | 45 | 45.7 | 44.3 | 43.8 | 43.1 | 43.1 | 44.3 | 45.3 | 44.6 |
| Liq. | | | | 1075 | | | | | | |
| Liq. Viscos. | | | | 17x 10⁴ | | | | | | |
| % Trans. at 585 nm | | 23.7 | 49.8 | 50.6 | 52.1 | 50.9 | 51.9 | 13.2 | 6.9 | 6.5 |

Example 1 contains no neodymium and is provided as a reference base glass.

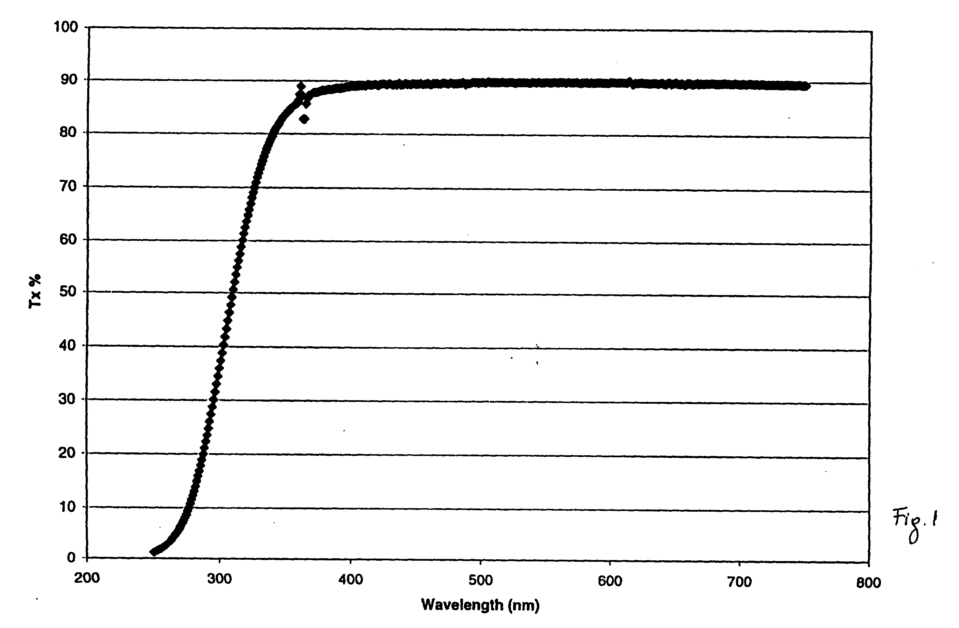

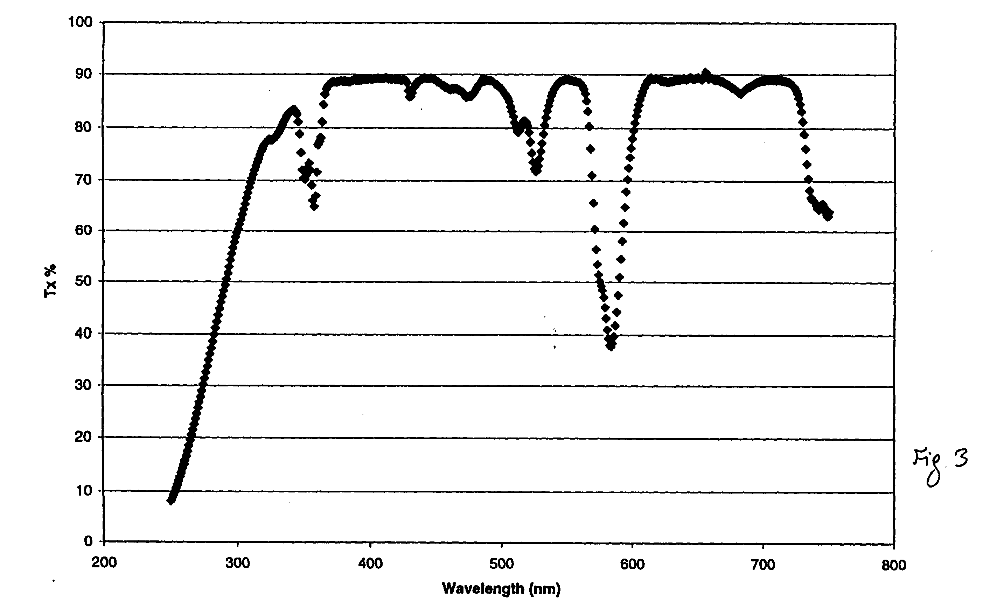

FIGS. 1-3 illustrate the light transmission spectra of glasses 4, 5 and 9 respectively. The glasses of these figures have a high transmission, i.e., average transmission about 90%, throughout the visible region of the spectrum between 400 - 700 nm, as well as into the near infrared spectral region, between 760 - 2500 nm. In determining the emission spectra, the glass samples were cut at 1.2 mm thick.

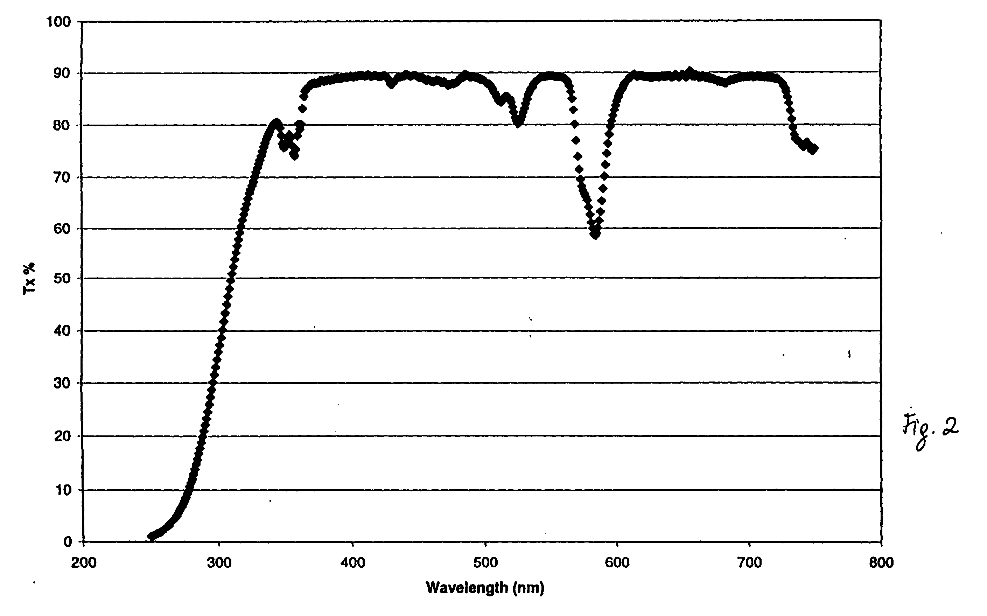

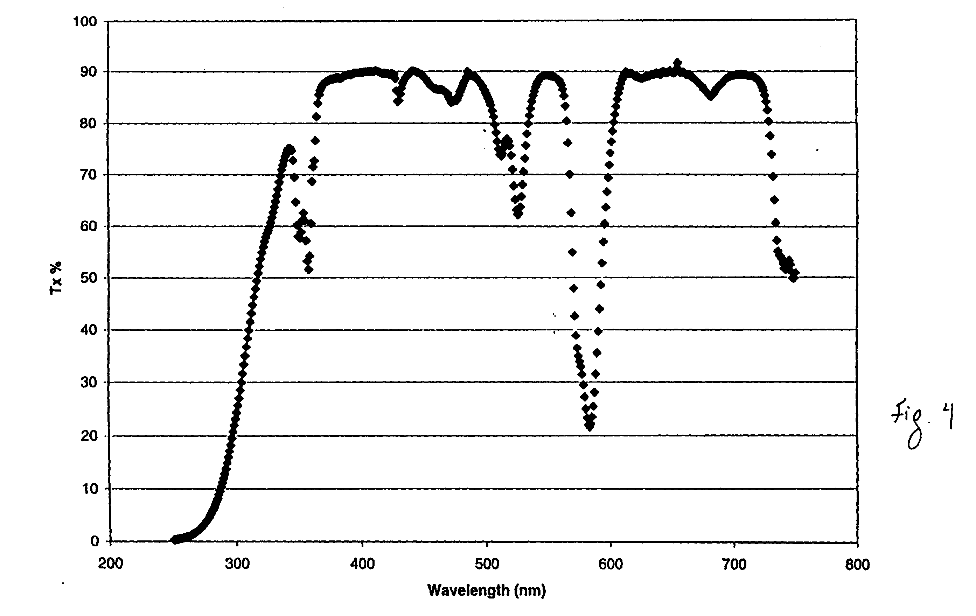

Referring now to FIG. 1, therein is shown the light transmission spectra of glass 4 containing 1.30 wt.% Nd₂O₃. Only about 60% of the yellow light at 585 nm is transmitted. In FIG. 2 where glass 5 containing 2.58 wt.% Nd₂O₃ is shown, the transmission of yellow light at 585 nm is only about 38%. In FIG. 4 where glass 9 containing 4.25 wt.% Nd₂O₃ is shown, the transmission of yellow light at 585 nm is further decreased to about 22%.

Although the now preferred embodiments of the invention have been set forth, it will be apparent to those skilled in the art that various changes and modifications may be made thereto without departing from the spirit and scope of the invention as set forth in the following claims.

## Claims

1. A glass composition suitable as an envelope for tungsten-halogen lamp, said glass exhibiting a strain point of about 668-686°C, a coefficient of thermal expansion of about 42-51 x10⁻⁷/°C, a liquidus temperature below 1080 °C, a viscosity at liquidus temperature greater than 150,000 poises, a transmission at 585 nm of about 6-25%, and consisting essentially, in terms of weight percent on the oxide basis, of: 53-56% SiO₂, 4-6% B₂O₃, 15-17% Al₂O₃, 7-9% BaO, 0.1-0.5% SrO, 4-9% CaO, 4-6% MgO, 0-1% ZnO, 1-8% Nd₂O₃.
